# EUROPEAN PATENT APPLICATION

(11) **EP 2 088 735 A1**
(43) Date of publication of application: **12.08.2009**
(21) Application number: 08002461.5
(22) Date of filing: 11.02.2008
(51) Int. Cl.: H04L 29/06

(54) **Client side media splitting function**

(71) Applicant: Siemens Schweiz AG, 8047 Zürich (CH)
(72) Inventor: Baker, Shaun, 8044 Zürich (CH); Kohler, Daniele, 8173 Neerach (CH)
(74) Representative: Kley, Hansjörg

(57) **Abstract**

Typically, standard audio and video capable VoIP Clients bundle the signaling and negotiation of their media streams within one logical session, resulting in all media streams originating from the client being terminated at the same destination. For various applications, there is a need to terminate a subset of the streams at a different destination, for example: to route just the audio stream to an external device associated with an ISDN-Subscriber. This invention provides a client-side media splitting and relay function that makes this possible.

## Description

This invention relates to a method for a media splitting function according to the preamble of claim 1 and a system for carrying out the method according to claim 6.

The function and techniques of a «remote desk» are described in EP 1 708 469 A1 [1]. In the wording of EP 1 708 469 A1 a remote desk is a multimedia terminal. In the context of this paper the term «remote desk» is used, because it describes its use and function more precisely.

Standard VoIP Clients such as audio and video capable SIP Clients bundle the signalling and negotiation of their media streams within one logical session or one media session, resulting in all media streams originating from the client being terminated at the same destination. Whilst adequate for peer to peer communications, there are many scenarios where such behaviour is inadequate: e.g. the video media stream bundled within the signalled media session needs to be terminated at a different destination to the audio stream, because the video stream cannot traverse an audio-only PBX.

It is therefore the task of the present invention to provide a remote desk Client-Side Splitting function with a means for a so implemented VoIP multimedia client to utilize an unrelated external media device for the playback and capture of any particular media stream comprising a part of the media session.

This task is solved by the features given in claim 1 regarding a method for the media splitting function, together with the media splitting function implemented in a client according to claim 6.

In the case of audio and video telephony, the invention allows the client application to terminate standard VoIP signaling and media streams from one media session, play the video stream locally and bridge the associated audio stream to an external VoIP or traditional telephony audio-only device, e.g. PSTN, ISDN, GSM, etc., hard phone.

Audio and video telephony is only one application of this invention: any combination of media streams can be split and bridged, then played locally or relayed to various external devices by this method.

The distributed client-side application of this invention overcomes single-point-of-failure limitations. Its distributed nature provides a means of scaling the functionality to encompass the divergent media streaming needs of unconstrained numbers of users. By placing full control of signalling and media streams at the site of the client it also facilitates media manipulation to provide all sorts of features, including typical telephony call features, such as transfer, hold, local conference, etc., using standard VoIP signalling, e.g. SIP.

As stated above, this invention provides an alternative, decentralized and scalable solution to the problem stated in the patent application EP 1 708 469 A1 [1] entitled «Method and system for connecting a multimedia terminal to a call centre».

As a media relay, such a client exhibits behaviour in common with Back-to-Back User Agents (B2BUAs), but with the subtle difference of dividing the various media stream logically associated within one call session, and while rendering a particular subset of that division locally, it also simultaneously relays the other subset to any number of distinct external devices. Regular B2BUAs - such as Session Border Controllers - are defined in Section 6 of RFC 3261. Otherwise there is no known solution to this problem.

Further advantageous embodiments of the present invention are given in dependent claims.

The invention will be now described in preferred embodiments with reference to the accompanying figures wherein:
- Figure 1: Client-Side Media Splitting in a PSTN/ISDN environment;
- Figure 2: Client-Side Media Splitting in a VoIP environment;
- Figure 3: Client-Side Media Splitting in a Mixed Environment.

Each of the figures shows a client-side media splitting function in a specific environment. A soft client implementing Remote Desk Client-Side Splitting solves the problem of terminating one of the complement of media streams that make up a media session - also sometimes deoted by «communication session» at an external device by «bridging» the particular media stream towards that device.

In the case of an incoming audio and video VoIP call, negotiated via SIP, the soft client would accept the incoming SIP INVITE, and terminate the audio and video RTP streams, negotiated in the associated SDP, exactly as a regular SIP VoIP client. This incoming call, however, would trigger the client to open a call to the hardware phone that is desired to be used for the audio media stream. To do so, a SIP INVITE is sent to the hardware phone, with SDP to establish an audio-only media stream. If the hardware phone is SIP VoIP capable, the message can be routed via normal SIP infrastructure, directly to its destination. When the phone supports another VoIP protocol, e.g. H.323, MEGACO, the INVITE is routed over an appropriate Gateway; when the hardware phone is located in a distinct network, e.g. PSTN, GSM, the SIP INVITE and resulting audio stream are similarly directed over signalling and media gateways, e.g. PBX. Wherever the destination of the hardware phone, the effect at the client is the same: two audio streams - one incoming and one outgoing - and one incoming video stream are established to handle the call. The video media stream is rendered/captured locally, at the client. The audio streams, however, are not played/recorded locally. Instead, they are bridged together in the manner typical of B2BUAs, so that the audio media is relayed to and from the external hard phone. «Relaying» involves copying the payload (i.e. audio data) of RTP packets from one media stream into the payload of RTP packets of the other media stream. Thus the incoming audio received from the regular VoIP client is sent for playback on the external hard phone, and likewise the audio recorded at the external hard phone is sent onwards to the regular VoIP client.

In particular the splitting may be realized according to the following example of a Session Description Protocol (SDP) description for a media session offering an audio and a video stream:
v=0
o=ETA 71351324 0 IN IP4 10.12.2.21
s=ScS Client
c=IN IP4 10.12.2.21
t=0 0
m=audio 4510 RTP/AVP 0 8 4
a=rtpmap:0 PCMU/8000
a=rtpmap:8 PCMA/8000
a=rtpmap:4 G723/8000
a=ptime:30
m=video 4512 RTP/AVP 34
a=rtpmap:34 H263/90000

In this case, the «m»-lines indicate that the media types pf the session. The session comprises both audio and video streams. The client implementing the splitting function would therefore render the video stream locally, but create a new stream to the external audio hard phone and copy the audio data contained in the RTP packet payloads between the two.

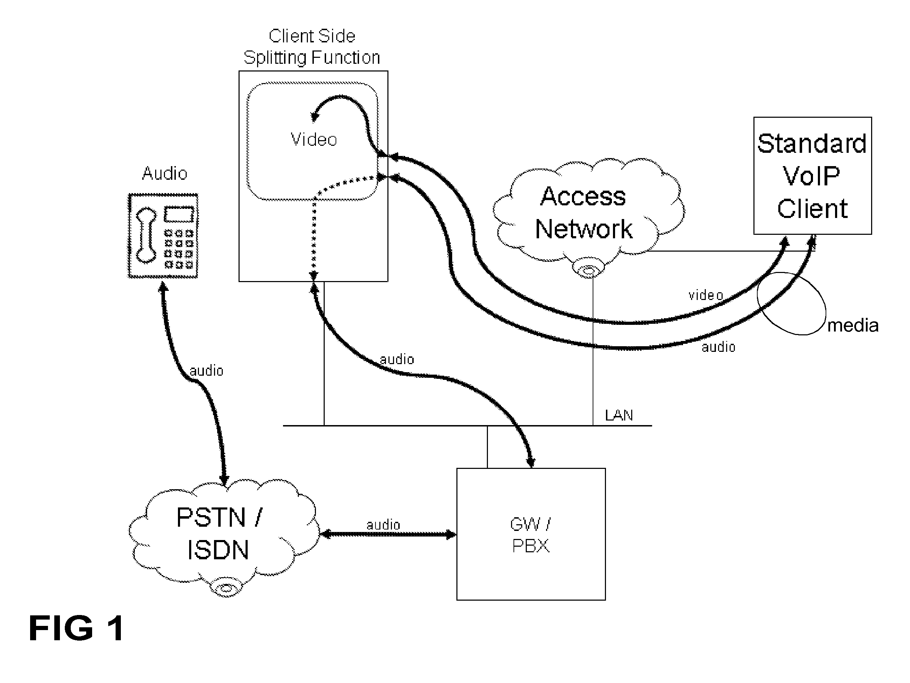

Fig. 1 shows the Client-Side Media Splitting in a PSTN/ISDN environment - video is rendered locally, whereas audio is bridged to PSTN/ISDN telephone, via a GW/PBX.

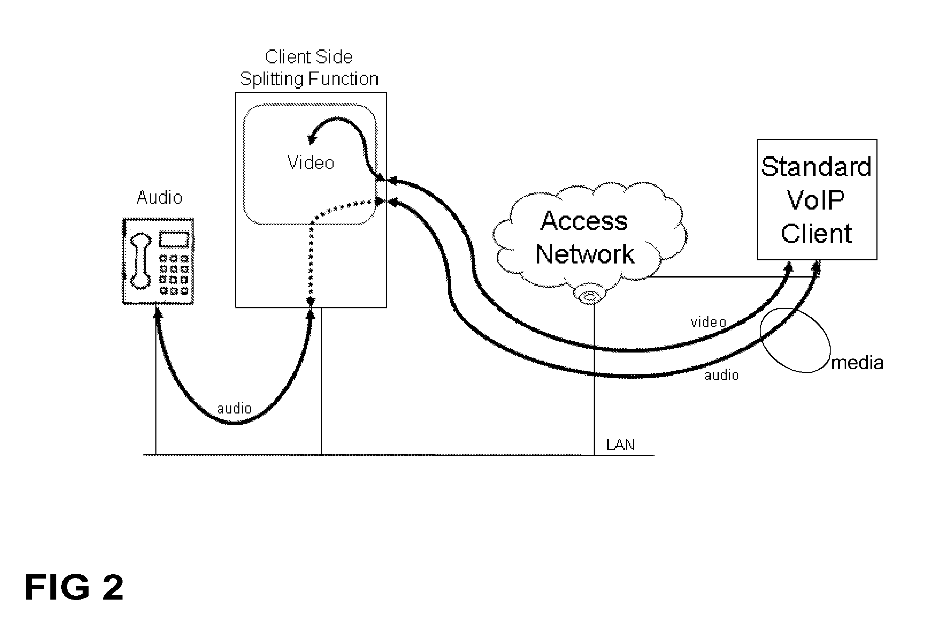

Figure 2 shows the Client-Side Media Splitting in a VoIP environment - video is rendered locally, whereas audio is bridged to an external VoIP telephone, located on the same LAN.

Figures 1 and 2 show the above scenario with a regular SIP audio and video VoIP client communicating with a client implementing the Remote Desk Client-Side Splitting function. In figure 1, the audio is bridged by the client to be relayed to and from a hard phone located in the PSTN. In figure 2, the audio is bridged to and from a SIP audio hard phone located within the same LAN. Outgoing calls are handled similarly: the audio and video originating client implementing Remote Desk Client-Side Splitting first establishes an audio media stream to the desired external hard phone, either directly or via a gateway, as described before. It then establishes outgoing audio and video media streams to the destination client with which it wishes to communicate. Again, the effect is to establish two audio streams and one video stream, all terminated at the client. The audio streams are bridged, so that audio flows in both directions between the hard phone and the destination client. Video is sent and received locally by the client over the video media stream to the destination client.

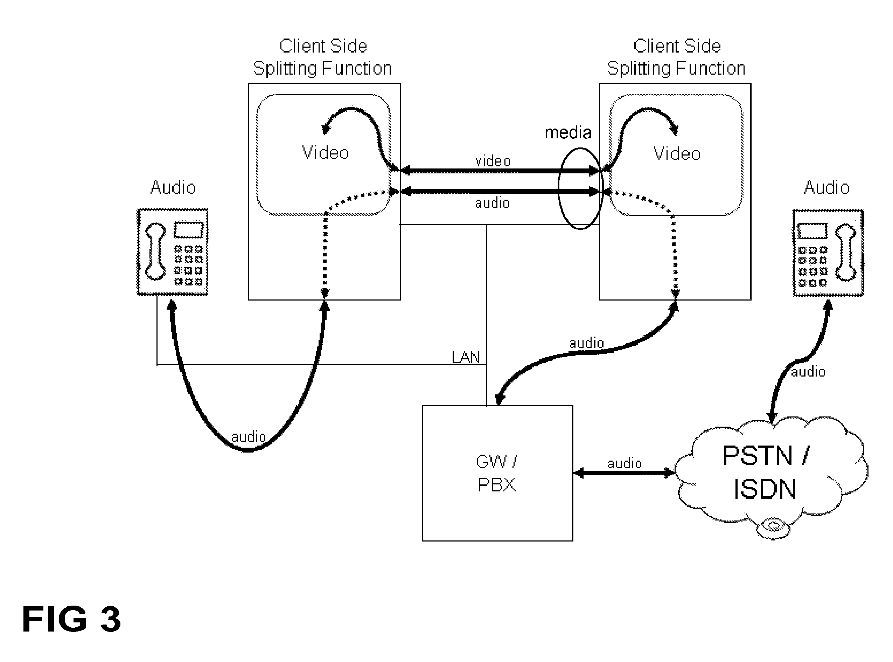

Figure 3 shows a Client-Side Media Splitting in a Mixed Environment - both clients rendering video locally, but audio is bridged to both VoIP and PSTN/ISDN external telephones.

Figure 3 shows two clients implementing the Remote Desk Client-Side Splitting function in communication with each other, one using an audio hard phone located in the PSTN, and the other a SIP VoIP audio hard phone located on the local LAN. The audio and video media streams flowing between them are signaled using standard SIP and negotiated using standard SDP, meaning such clients can intercommunicate with any third-party audio and video capable VoIP clients. The audio streams flowing between them and the hard phones are also signaled and negotiated using standard SIP and SDP, meaning they can intercommunicate with any standard audio capable VoIP client, whether soft phone, hard phone, or gateway. Established calls can be closed in the following way: either a SIP BYE is received from the remote audio and video VoIP client or the local user hangs up, resulting in a BYE being received from the hard phone. Either way, the audio bridge is broken, and the various audio and video media streams are terminated. For example: when the BYE originates from the hard phone, a corresponding BYE is sent to the remote audio and video VoIP client; when the BYE originates from the remote client, a BYE is likewise sent to the hard phone. The client is always responsible for the lifecycle of the signaling and media stream between itself and the external hard phone which is desired to be used. This includes all insession call-feature signaling, and its correct interpretation for the divergent call legs for the media streams that it has split. The client is also responsible for locating the external hard phone, either by local configuration or remote access; e.g. database lookup typical of the Remote Desk solution, ENUM, etc.

The important feature of the Remote Desk Client-Side Splitting function lies in the ability of a so implemented client to accept or originate a call with multimedia streams and render some subset of those media streams locally while simultaneously relaying other subsets to one or more remote destinations. In so doing, the function facilitates any third-party standard multimedia VoIP client to communicate seamlessly with differing physical devices, specialized separately for particular media characteristics, within the convenience of a standard single call setup. From a telephony perspective, the client-side splitting of video and bridging of audio media permits any existing audio-only infrastructure to be easily video enabled. For a user, this means that video communication can enhance the experience of using the regular hard phone. From a solution perspective, it means that existing investment in audio-only architecture can be preserved and cost effectively enhanced with video communications. Because the media session is terminated at the client prior to splitting, bridging, rendering locally or relaying remotely, the client remains in complete control of both media and associated signaling data. This facilitates the provisioning of existing telephony call features - e.g. transfer, hold, local conference, etc. - using standards-based means as SIP, as well as providing an ideal site for service innovation. Additionally, the distributed nature of each client being responsible for its own implementation - as well as the decoupled nature - of the function results in solutions with no single point of failure, nor resulting constraints of scale.

**List of used symbols, abbreviations and acronyms**

| | |
|---|---|
| B2BUA | Back-to-Back User Agents |
| ENUM | Telephone Number Mapping, IETF RFC 3761 |
| ETSI | European Technical Standardization Institute |
| GSM | Global System for Mobile Communication |
| GW | Gateway |
| IETF | Internet Engineering Task Force |
| ISDN | Integrated Services Digital Network |
| ITU-T | International Telecommunication Union |
| PBX | Private Branch Exchange |
| PSTN | Public Switched Telephone Network |
| RTP | Real Time Transport Protocol, IETF RFC 1889 |
| SDP | Session Description Protocol |
| SIP | Session Initiation Protocol, IETF RFC 3261 |
| H.248 | MEGACO (Media Gateway Control Protocol), ITU-T/IETF |
| VoIP | Voice over Internet Protocol |

### References

[1] EP 1 708 469 A1
   «Method and system for connecting a multimedia terminal to a call centre» Siemens Schweiz AG, CH - 8047 Zürich.

## Claims

1. Method for a media splitting function for a VoIP-Client, where
- a media session comprising signaling data and media streams is established with the VoIP-Client,
- the media session contains at least two distinct media streams, in the following context called 1^{st} and 2^{nd} media stream,
- the media splitting function is associated to the VoIP-Client and hereafter called a client side splitting function,
**characterised in** by the steps
(A) the media session is routed to the client side splitting function and the at least two media streams are split
where; (A1) **in that** media splitting function one of the at least two media streams is played locally at the VoIP Client;
(A2) the other stream is bridged to an external device;
(B) the media session is terminated **in that** VoIP-Client.

2. Method according to claim 1;
**characterised in that**
the media stream which is played locally is a video stream.

3. Method according to claim 1 or 2;
**characterised in that**
the media stream which is bridged to the external device is a audio stream.

4. Method according to one of the claims 1 to 3;
**characterised in that**
in step (A) the splitting of the at least two media streams is done by indications in a SDP-Protocol.

5. Method according to claim 4;
**characterised in that**
in the SDP-Protocol there is a field indicating the type of a media stream.

6. Media splitting function for a VoIP-Client, where
- a media session comprising signaling data and media streams is established with the VoIP-Client,
- the media session contains at least two distinct media streams, in the following context called 1^{st} and 2^{nd} media stream,
- the media splitting function is associated to the VoIP-Client and hereafter called a client side splitting function,
**characterised in** by
(A) the media session is routed to the client side splitting function and the at least two media streams are split
where; (A1) **in that** media splitting function one of the at least two media streams is played locally at the VoIP Client;
(A2) the other stream is bridged to an external device;
(B) the media session is terminated **in that** VoIP-Client.

7. Media splitting function according to claim 6;
**characterised in that**
the media stream which is played locally is a video stream.

8. Media splitting function according to claim 6 or 7;
**characterised in that**
the media stream which is bridged to the external device is a audio stream.

9. Media splitting function according to one of the claims 6 to 8;
**characterised in that**
the splitting of the at least two media streams is done by indications in a SDP-Protocol.

10. Media splitting function according to claim 9;
**characterised in that**
in the SDP-Protocol there is a field indicating the type of a media stream.

## Amended claims

### Amended claims in accordance with Rule 137(2) EPC.

**1.** Method for a media splitting function in a VOIP-Client (1, 2) the VOIP-Client being connected to a local area network (4) and the media splitting function hereafter called a client side splitting function (11, 12), where
- a media session comprising signaling data and media streams (6, 7) is established with the VoIP-Client (1, 2) ,
- the media session contains at least two distinct media streams (6, 7), in the following context called 1^{st} and 2^{nd} media stream,
- one media stream (6, 7) is established between an external device (20) and one VoIP-Client (2), the external device being connected via the Public Switched Network (3) an a Gateway (GW/PBX) to the local area network (4),
**characterised in** by the steps
(A) the media session is relayed to the client side splitting function (11, 12) and the at least two media streams are split where;
(A1) **in that** media splitting function (11, 12) one of the at least two media streams (6, 7) is played locally at the VoIP Client (1, 2);
(A2) the other stream (6, 7) is routed to an external device (20, 21);
(B) the media session is terminated **in that** VoIP-Client (1, 2) .

**2.** Method according to claim 1;
**characterised in that**
the media stream which is played locally is a video stream (7) .

**3.** Method according to claim 1 or 2;
**characterised in that**
the media stream which is routed to the external device (20, 21) is a audio stream.

**4.** Method according to one of the claims 1 to 3;
**characterised in that**
in step (A) the splitting of the at least two media streams (6, 7) is done by indications in a SDP-Protocol.

**5.** Method according to claim 4;
**characterised in that**
in the SDP-Protocol there is a field indicating the type of a media stream (6, 7).
